(19) Europäisches Patentamt / European Patent Office / Office européen des brevets

(11) **EP 4 474 172 A1**

(12) **EUROPÄISCHE PATENTANMELDUNG**

(43) Veröffentlichungstag:
**11.12.2024   Patentblatt 2024/50**

(21) Anmeldenummer: **24175371.4**

(22) Anmeldetag: **13.05.2024**

(51) Internationale Patentklassifikation (IPC):
**B60C 11/03** $^{(2006.01)}$     **B60C 11/16** $^{(2006.01)}$

(52) Gemeinsame Patentklassifikation (CPC):
**B60C 11/16; B60C 11/032**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **05.06.2023   DE 102023205212**

(71) Anmelder: **Continental Reifen Deutschland GmbH**
**30175 Hannover (DE)**

(72) Erfinder:
• **Spechtmeyer, Torben**
  **30175 Hannover (DE)**
• **Schlittenhard, Jan**
  **30175 Hannover (DE)**
• **Kott, Burkhard**
  **30175 Hannover (DE)**

(74) Vertreter: **Continental Corporation**
**c/o Continental AG**
**Intellectual Property**
**Postfach 169**
**30001 Hannover (DE)**

(54) **KOMBINATION AUS EINEM FAHRZEUGLUFTREIFEN UND SPIKES UND FAHRZEUGLUFTREIFEN**

(57)   Die Erfindung betrifft eine Kombination aus einem Fahrzeugluftreifen und Spikes (5), wobei folgende Beziehungen gelten

$$h_{SK} > t_{SL} \qquad \text{Beziehung I}$$

$$ü_{SK} = h_{SK} - t_{SL} \qquad \text{Beziehung II}$$

$$t_V > ü_{SK} \qquad \text{Beziehung III}$$

$$a_K = t_V - ü_{SK} \qquad \text{Beziehung IV}$$

wobei
$h_{SK}$ die Höhe des Spikekörpers (5a),
$t_{SL}$ die Tiefe des Spikeloches (3),
$ü_{SK}$ der Überstand des Spikekörpers (5a) bei eingesetztem Spike (5),
$t_V$ die Tiefe der Vertiefung (2) und
$a_K$ der Abstand des Spikekörpers (5a) zur Laufstreifenperipherie bei eingesetztem Spike (5) ist,
wobei der Überstand ($ü_{SK}$) des Spikekörpers (5a) zumindest 0,10 mm beträgt
   Die Tiefe ($t_V$) der Vertiefung (2) beträgt 0,70 mm bis 1,20 mm und der Abstand ($a_K$) des Spikekörpers (5a) zur Laufstreifenperipherie bei eingesetztem Spike (5) beträgt zumindest 0,40 mm.

Fig. 8: VIII-VIII

**Beschreibung**

Die Erfindung betrifft eine Kombination aus einem Fahrzeugluftreifen und Spikes, wobei der Fahrzeugluftreifen einen Laufstreifen mit Profilpositiven aufweist, in welchen Vertiefungen mit jeweils einem Vertiefungsboden ausgebildet sind, von welchem je ein Spikeloch zum Einsetzen eines Spikes ausgeht, wobei der bei eingesetztem Spike von diesem nicht eingenommene Teil der Vertiefung ein Eisreservoir zur Aufnahme von Eispartikeln bildet,

wobei jeder Spike einen Spikekörper und in diesem verankerten Spikepin aufweist,
wobei folgende Beziehungen gelten

$$h_{SK} > t_{SL} \qquad \text{Beziehung I}$$

$$ü_{SK} = h_{SK} - t_{SL} \qquad \text{Beziehung II}$$

$$t_V > ü_{SK} \qquad \text{Beziehung III}$$

$$a_K = t_V - ü_{SK} \qquad \text{Beziehung IV}$$

wobei

$h_{SK}$ die Höhe des Spikekörpers,
$t_{SL}$ die Tiefe des Spikeloches,
$ü_{SK}$ der Überstand des Spikekörpers bei eingesetztem Spike,
$t_V$ die Tiefe der Vertiefung,
$a_K$ der Abstand des Spikekörpers zur Laufstreifenperipherie bei eingesetztem Spike ist,

wobei der Überstand des Spikekörpers zumindest 0,10 mm beträgt.

Die Erfindung betrifft ferner einen zu dieser Kombination korrespondierenden Fahrzeugluftreifen mit einem Laufstreifen mit Profilpositiven, in welchen Vertiefungen mit jeweils einem Vertiefungsboden ausgebildet sind, von welchem je ein Spikeloch ausgeht, in welches ein Spike eingesetzt ist, wobei der vom Spike nicht eingenommene Teil der Vertiefung ein Eisreservoir zur Aufnahme von Eispartikeln bildet, wobei jeder Spike einen Spikekörper und einen in diesem verankerten Spikepin aufweist, wobei an den Spikekörper der Vertiefungsboden, ein ringförmig umlaufender Abschnitt des Vertiefungsbodens oder mehrere Abschnitte des Vertiefungsbodens angrenzt bzw. angrenzen, wobei sich der Spikekörper komplett radial innerhalb der Laufstreifenperipherie befindet und wobei der Spikekörper zur Laufstreifenperipherie einen Abstand und einen gegenüber dem Niveau des Vertiefungsbodens ermittelten Überstand von zumindest 0,10 mm aufweist.

Eine derartige Kombination und ein derartiger Fahrzeugluftreifen sind beispielsweise aus der DE 10 2014 225 047 A1 bekannt. Der offenbarte Fahrzeugluftreifen weist einen Laufstreifen mit Profilblöcken mit in Draufsicht kreisförmigen Vertiefungen mit je einem Vertiefungsboden auf, von welchem je ein Spikeloch ausgeht, in welches ein Spike eingesetzt ist. Der Spike ist, in Draufsicht betrachtet, ringförmig vom Vertiefungsboden umlaufen, wobei die Oberseite des Spikekörpers entweder bündig mit der Laufstreifenperipherie abschließt oder sich geringfügig radial innerhalb der Laufstreifenperipherie befindet, wobei der Abstand des Spikekörpers zur Laufstreifenperipherie insbesondere etwa 0,3 mm beträgt. Ferner ist die Blockaußenfläche um 0,4 mm bis 2,0 mm, insbesondere um 1,0 mm, vom Spikepin überragt. An den Spikekörper schließen an gegenüberliegen Seiten im Profilblock ausgebildete Ableitkanäle an, welche ein optimales Wegleiten der beim Fahren auf einer Eisfahrbahn anfallenden Eispartikel gewährleisten sollen.

Die durch die Vertiefung gebildeten, unmittelbar an den jeweiligen Spike angrenzenden Eisreservoire zur Aufnahme der Eispartikel sind für die Wirkung der Spikes von Vorteil. Bei einer Kombination der eingangs genannten Art sorgt die Beziehung II, d.h. der Überstand des Spikekörpers, dafür, dass bei eingesetztem Spike die Oberseite des Spikekörpers vom angrenzenden Gummimaterial des Laufstreifens nicht bzw. kaum überzogen ist, wodurch der Spike aufrecht und daher fest im Spikeloch sitzt. Andernfalls könnte der Spike durch das Gummimaterial "verzogen" werden, sodass der Spike in der Folge schief im Spikeloch sitzt, wodurch die Gefahr, dass der Spike aus dem Spikeloch herausbricht, erhöht ist. Entsprechend der Beziehungen III und IV befindet sich die Oberseite des Spikekörpers bei eingesetztem Spike radial innerhalb der Laufstreifenperipherie, sodass die Gefahr, dass beim Abrollen des Reifens auf eis- und schneefreien Fahrbahnen der Straßenbelag durch den Spikekörper beschädigt wird, gering ist. Ferner ist bei mit Spikes versehenen Laufstreifen grundsätzlich drauf zu achten, dass etwaige Veränderungen an den Spikes und/oder am Laufstreifen den festen Sitz der Spikes in den Spikelöchern nicht beeinträchtigen. Immer strengere Anforderungen machen es erforderlich, das Ausmaß der von Spikes auf Straßenbelägen verursachte Schäden weiter zu verringern bzw. solche Schäden zu verhindern.

Der Erfindung liegt daher die Aufgabe zugrunde eine Kombination bzw. einen Fahrzeugluftreifen der eingangs genannten Art zur Verfügung zu stellen, mittels welcher bzw. welchem beim Fahren auf eis- und schneefreien, asphaltierten Straßen die Schäden am Straßenbelag deutlich reduziert bzw. weitgehend verhindert sind, wobei weiterhin ein fester Sitz der Spikes in den Spikelöchern gewährleistet sein soll.

Betreffend die Kombination wird die gestellte Aufgabe erfindungsgemäß dadurch gelöst, dass die Tiefe der Vertiefung 0,70 mm bis 1,20 mm und der Abstand des Spikekörpers zur Laufstreifenperipherie bei eingesetztem Spike zumindest 0,40 mm beträgt.

Betreffend den Fahrzeugluftreifen wird die gestellte Aufgabe erfindungsgemäß dadurch gelöst, dass die Tiefe der Vertiefung 0,70 mm bis 1,20 mm und der Abstand des Spikekörpers zur Laufstreifenperipherie zumindest 0,40 mm beträgt.

Diese spezielle Ausgestaltung führt dazu, dass der Abstand des Spikekörpers zur Laufstreifenperipherie gegenüber bekannten Ausführungen vergrößert ist, wobei - bedingt durch die Tiefe der Vertiefung von 0,70 mm bis 1,20 mm - gleichzeitig der an sich bekannte, zum Vertiefungsboden vorliegende, minimale Überstand des Spikekörpers von zumindest 0,10 mm (Mindestüberstand) erhalten bleibt. Der jeweils vorliegende Abstand des Spikekörpers zur Laufstreifenperipherie ergibt sich aus der Differenz der jeweiligen Tiefe der Vertiefung und dem Überstand Spikekörpers und sorgt auf eis- und schneefreien, asphaltierten Straßen für eine deutlich verringerte Belastung des Straßenbelags durch den Spikekörper, wodurch keine oder kaum mehr Schäden am Straßenbelag auftreten. Die Obergrenze des Abstands des Spikekörpers zur Laufstreifenperipherie ergibt sich somit aus der Differenz der jeweiligen Tiefe der Vertiefung und dem erwähnten Mindestüberstand des Spikekörpers. Da der Mindestüberstand des Spikekörpers erhalten bleibt, ist weiterhin ein fester Sitz des Spikes im Laufstreifen gewährleistet. Ein ausschließliches Tiefersetzen eines Spikes ohne Anpassung der Vertiefung würde den Mindestüberstand des Spikekörpers derart reduzieren, dass sich beim Einsetzen des Spikes in ein Spikeloch das umgebende Gummimaterial derart über die Oberseite des Spikekörpers ziehen könnte, dass der Sitz des Spikes beeinträchtigt wird. Dies wird durch die spezielle Auslegung der entsprechenden Dimensionen zuverlässig verhindert.

Gemäß einer bevorzugten Ausführung der Kombination weist der Spikepin einen aus dem Spikekörper herausragenden Pinendabschnitt auf, wobei ferner folgende Beziehung gilt

$$\ddot{u}_P = c_P - a_K \qquad \text{Beziehung V}$$

wobei

$\ddot{u}_P$ der Überstand des Pinendabschnitts bei eingesetztem Spike,
$c_P$ die Länge des Pinendabschnitts und
$a_K$ der Abstand des Spikekörpers zur Laufstreifenperipherie bei eingesetztem Spike ist,
wobei der Überstand des Pinendabschnitts zumindest 1,00 mm beträgt.

Ein solcher Überstand des Pinendabschnitts ist für den Eisgriff vorteilhaft.

Gemäß einer entsprechend korrespondierenden, bevorzugten Ausführung des Fahrzeugluftreifens weist der Spikepin einen aus dem Spikekörper herausragen Pinendabschnitt mit einem gegenüber dem Niveau der Laufstreifenperipherie ermittelten Überstand von zumindest 1,00 mm auf.

Eine weitere bevorzugte Ausführung der Kombination bzw. des Fahrzeugluftreifens ist dadurch gekennzeichnet, dass die Tiefe der Vertiefung bis zu 1,00 mm, insbesondere bis zu 0,90 mm, bevorzugt 0,75 mm bis 0,85 mm, und besonders bevorzugt 0,80 mm beträgt.

Ferner ist es vorteilhaft, wenn bei der Kombination bzw. beim Fahrzeugluftreifen der Überstand des Spikekörpers höchstens 0,40 mm, insbesondere höchstens 0,30 mm, beträgt. Dadurch sind die insbesondere bei fortgeschrittenem Laufstreifenabrieb auftretenden Belastungen des Straßenbelags durch den Spikekörper weiter reduziert.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen

Fig. 1 eine Schrägansicht auf einen Profilblock eines Laufstreifens eines Fahrzeugluftreifens,

Fig. 2 eine Draufsicht auf den Profilblock aus Fig. 1,

Fig. 3 einen Schnitt entlang der Linie III-III der Fig. 2,

Fig. 4 einen Schnitt entlang der Linie IV-IV der Fig. 2,

Fig. 5 eine Schrägansicht des Profilblocks aus Fig. 1, wobei in den Profilblock ein Spike eingesetzt ist,

Fig. 6 eine Draufsicht auf den Profilblock aus Fig. 5,

Fig. 7 einen Schnitt entlang der Linie VII-VII der Fig. 6,

Fig. 8 einen Schnitt entlang der Linie VIII-VIII der Fig. 6 und

Fig. 9 eine vergrößerte Darstellung des Details $Z_9$ der Fig. 8

Die Erfindung befasst sich mit einer Kombination aus einem Fahrzeugluftreifen und Spikes sowie ferner mit einem Fahrzeugluftreifen mit diesen Spikes. Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem ganzzahligen Felgendurchmesser von 13 Zoll bis 24 Zoll, insbesondere von 18 Zoll bis 23 Zoll, wobei die Reifen zum Fahren unter winterlichen Fahrbedingungen vorgesehen sind.

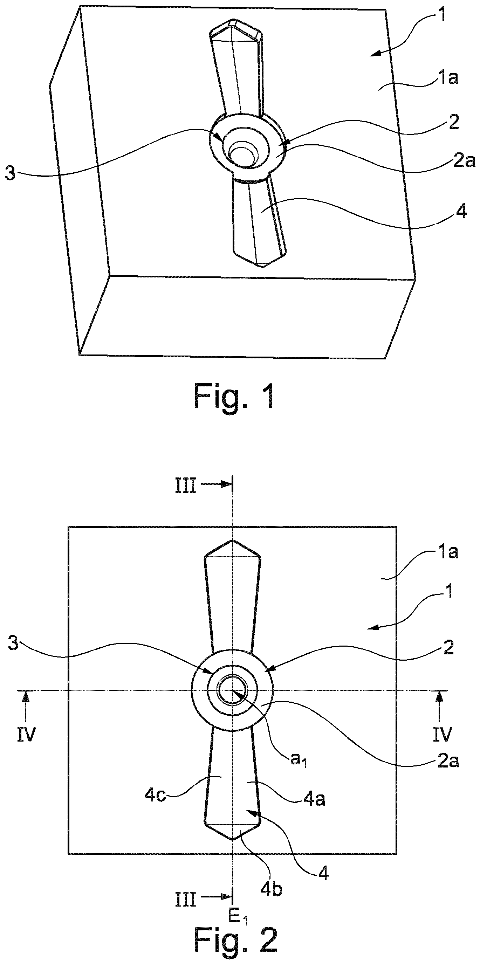

Fig. 1 bis Fig. 4 zeigen schematisch einen Profilblock 1 eines Laufstreifens eines Fahrzeugluftreifens. Der Profilblock 1 ist von nicht gezeigten Rillen, beispielsweise Umfangs- und Querrillen, begrenzt und weist eine an der Laufstreifenperipherie liegende Blockaußenfläche 1a auf. Die Rillen sind bevorzugt auf die jeweils vorgesehene Profiltiefe von üblicherweise 6,5 mm bis 13,0 mm ausgeführt.

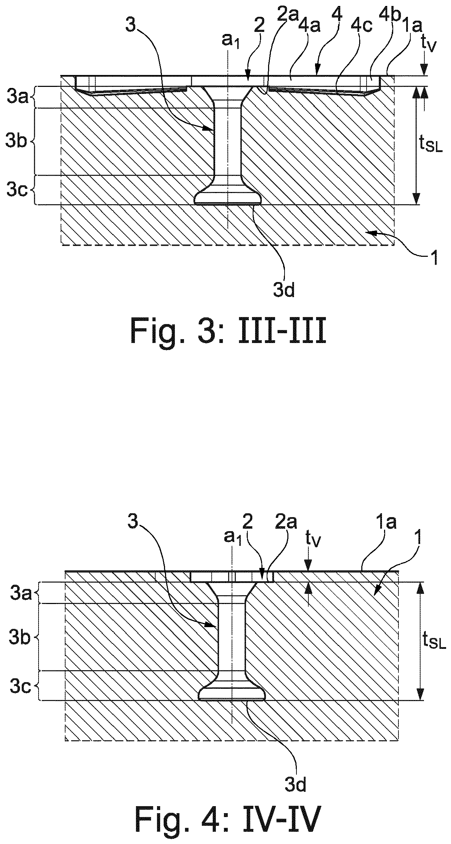

Der Profilblock 1 ist mittig mit einer von der Blockaußenfläche 1a ausgehenden, in Draufsicht kreisförmigen (Fig. 2), scheibenförmigen, kreiszylindrischen Vertiefung 2 versehen, welche in radialer Richtung eine konstante Tiefe tv (Fig. 3, Fig. 4) von 0,70 mm bis 1,20 mm, insbesondere von bis zu 1,00 mm, bevorzugt von bis zu 0,90 mm, besonders bevorzugt von 0,75 mm bis 0,85 mm, und beim Ausführungsbeispiel von 0,80 mm aufweist und in radialer Richtung durch einen parallel zur Blockaußenfläche 1a ausgerichteten, in Draufsicht (Fig. 2) kreisringförmig umlaufenden Vertiefungsboden 2a begrenzt ist. Gemäß Fig. 1, Fig. 3 und Fig. 4 geht vom Vertiefungsboden 2a ein in radialer Richtung in den Profilblock 1 hineinragendes Spikeloch 3 aus, welches gemäß Fig. 2, in Draufsicht betrachtet, kreisförmig und zentrisch zum Vertiefungsboden 2a ausgeführt sowie und vom Vertiefungsboden 2a umlaufen ist. Das Spikeloch 3 und die Vertiefung 2 weisen eine gemeinsame, in radialer Richtung verlaufende Hauptachse $a_1$ (Fig. 3, Fig. 4) auf, bezüglich welcher das Spikeloch 3 und die Vertiefung 2 rotationssymmetrisch ausgeführt sind.

Wie Fig. 3 und Fig. 4 zeigen, setzt sich das Spikeloch 3 in radialer Richtung von radial außen nach radial innen aus drei Abschnitten zusammen, nämlich einem konusförmigen Locheinlauf 3a, einem kreiszylindrischen Kanal 3b und einer konusartigen Fußöffnung 3c. Das Spikeloch 3 ist in radialer Richtung durch einen parallel zur Blockaußenfläche 1a ausgerichteten Lochboden 3d begrenzt und weist eine gegenüber dem Niveau des Vertiefungsbodens 2a in radialer Richtung entlang der Hauptachse $a_1$ ermittelte Tiefe $t_{SL}$ auf.

Das Spikeloch 3 wird in bekannter Weise während der Vulkanisation des Fahrzeugluftreifens mittels eines Moldpins ausgeformt. Gleichzeitig wird dabei die Vertiefung 2 über eine am entsprechenden Formteil der Vulkanisationsform vorgesehene flache Erhebung in den Profilblock 1 eingeprägt. Die Vertiefung 2 kann alternativ auch von einem Haltelement des Moldpins mitgebildet werden, wobei das Halteelement insbesondere ein sogenannter "Rotations-Lock" ist, mit welchem der Moldpin am jeweiligen Formteil austauschbar befestigt ist.

Gemäß Fig. 1 sind beim gezeigten Ausführungsbeispiel im Profilblock 1 beginnend bei der Vertiefung 2 zwei durch die Vertiefung 2 getrennte, oberflächliche, einander diametral gegenüberliegende, sich in Umfangsrichtung erstreckende Ableitkanäle 4 ausgebildet. Wie Fig. 2 zeigt, weist jeder Ableitkanal 4 eine von der Umfangsrichtung und der Hauptachse $a_1$ aufgespannte Symmetrieebene $E_1$ auf, wobei sich jeder Ableitkanal 4 aus einem an die Vertiefung 2 anschließenden, in Draufsicht langgestreckten, sich ausgehend von der Vertiefung 2 kontinuierlich verbreiternden Hauptabschnitt 4a und einem gegenüber dem Hauptabschnitt 4a kürzer ausgeführten Endabschnitt 4b zusammensetzt. Ferner weist jeder Ableitkanal 4 einen Kanalboden 4c auf, welcher gemäß Fig. 3 derart zur Blockaußenfläche 1a geneigt ist, dass jeder Ableitkanal 4 eine in der Symmetrieebene $E_1$ (vergl. Lage der Linie III-III in Fig. 2) in radialer Richtung ermittelte Tiefe aufweist, welche ausgehend von den Enden des Ableitkanals 4 über den Hauptabschnitt 4a und den Endabschnitt 4b zum gegenseitigen Anschluss des Hauptabschnitts 4a an den Endabschnitt 4b kontinuierlich zunimmt.

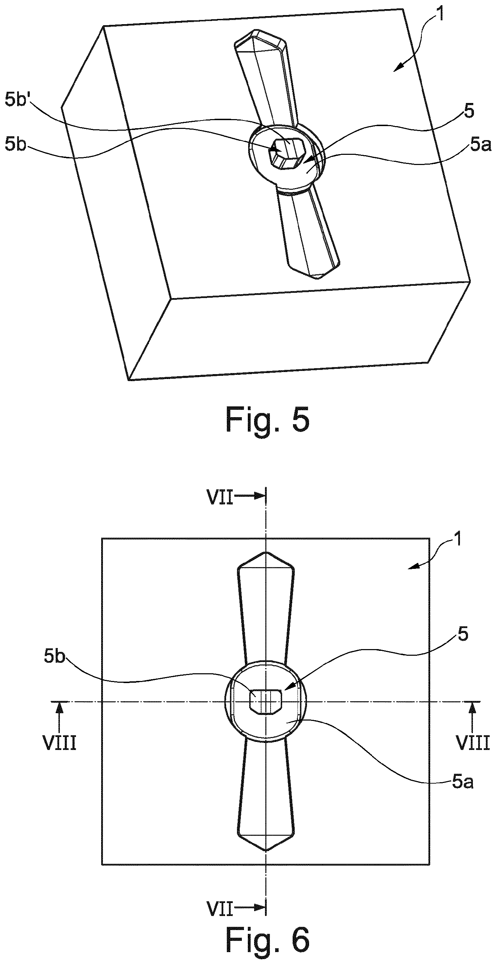

Fig. 5 und Fig. 6 zeigen je eine Ansicht auf den Profilblock 1 mit einem in das Spikeloch 3 (Fig. 1) eingesetzten Spike 5.

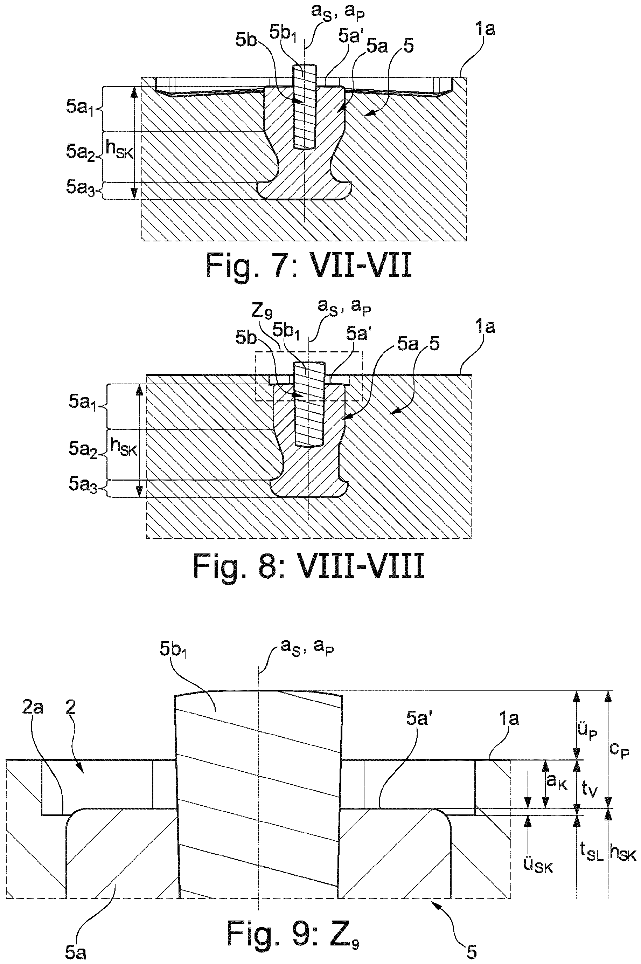

Gemäß Fig. 7 und Fig. 8 setzt sich der Spike 5 aus einem Spikekörper 5a und einem in diesem verankerten Spikepin 5b zusammen, wobei der Spike 5 eine mittig durch den Spikekörper 5a sowie bei aufrecht ausgerichtetem Spike 5 in vertikaler Richtung verlaufende Spikeachse as aufweist.

Der Spikekörper 5a setzt sich entlang der Spikeachse as aus einem Oberflansch $5a_1$, einem taillierten Mittelflansch $5a_2$ und einem Fußflansch $5a_3$ zusammen und weist eine am Oberflansch $5a_1$ ausgebildete, parallel zur Blockaußenfläche 1a verlaufende, ebene Oberseite 5a' und eine parallel zu Spikeachse as gemessene, auf die Oberseite 5a' bezogene Höhe $h_{SK}$ auf. Wie ein Vergleich von Fig. 3 mit Fig. 7 zeigt, weist der Spikekörper 5a (Fig. 7) - wie an sich bekannt und üblich - ein wesentlich größeres Volumen als das Spikeloch 3 (Fig. 3) auf, um einen guten Presssitz des Spikes 5 (Fig. 7) im Spikeloch 3 (Fig. 3) zu gewährleisten.

Gemäß Fig. 7 und Fig. 8 weist der Spikepin 5b eine mittig durch den Spikepin 5b sowie bei aufrecht ausgerichtetem Spike 5 in vertikaler Richtung verlaufende Pinachse $a_P$ auf, welche beim Ausführungsbeispiel mit der Spikeachse as zusammenfällt. Der Spikepin 5b weist ferner einen aus dem Spikekörper 5a heraus- und von dessen Oberseite 5a' abragenden, daher den Oberflansch $5a_1$ überragenden, Pinendabschnitt $5b_1$ mit einer entlang der Pinachse $a_P$ gemessenen Länge $c_P$ auf (Fig. 9).

Für die bereits erwähnte Kombination aus einem Fahrzeugluftreifen und Spikes 5 gelten folgende, anschließend genauer erläuterte Beziehungen:

$$h_{SK} > t_{SL} \qquad \text{Beziehung I}$$

$$ü_{SK} = h_{SK} - t_{SL} \qquad \text{Beziehung II}$$

$$t_V > ü_{SK} \qquad \text{Beziehung III}$$

$$a_K = t_V - ü_{SK} \qquad \text{Beziehung IV}$$

$$ü_P = c_P - a_K \qquad \text{Beziehung V}$$

Gemäß Beziehung I ist die Höhe $h_{SK}$ (Fig. 7, Fig. 8, in Fig. 9 angedeutet) des Spikekörpers 5a größer als die Tiefe $t_{SL}$ (Fig. 3, Fig. 4, in Fig. 9 angedeutet) des Spikeloches 3. Ein nach Beziehung II zwischen der Höhe $h_{SK}$ und der Tiefe $t_{SL}$ und somit in radialer Richtung ermittelter, zum Niveau des Bodens 2a der Vertiefung 2 vorliegender Überstand $ü_{SK}$ (Fig. 9) des Spikekörpers 5a beträgt 0,10 mm bis 0,40 mm, insbesondere höchstens 0,30 mm, und spezifiziert das Ausmaß der Beziehung I, wobei sich der Überstand $ü_{SK}$ - wie die Höhe $h_{SK}$ des Spikekörpers 5a - auf die Oberseite 5a' des Spikekörpers 5a bezieht (Fig. 9). Die Tiefe tv (Fig. 9) der Vertiefung 2, welche - wie bereits erwähnt - 0,70 mm bis 1,20 mm, insbesondere bis zu 1,00 mm, bevorzugt bis zu 0,90 mm, besonders bevorzugt 0,75 mm bis 0,85 mm, und beim Ausführungsbeispiel 0,80 mm beträgt, ist - wie in Beziehung III angegeben - größer als der Überstand $ü_{SK}$ (Fig. 9) des Spikekörpers 5a, sodass sich die Oberseite 5a' des Spikekörpers 5a zwischen dem Niveau der Blockaußenfläche 1a und dem Niveau des Vertiefungsbodens 2a befindet. Ein nach Beziehung IV ermittelter, in radialer Richtung gemessener Abstand $a_K$ (Fig. 9) von der Oberseite 5a' des Spikekörpers 5a zur Blockaußenfläche 1a beträgt zumindest 0,40 mm und spezifiziert das Ausmaß der Beziehung III. Ein nach Beziehung V ermittelter, in radialer Richtung entlang der Pinachse $a_P$ gemessener Überstand $ü_P$ (Fig. 9) des Pinendabschnitts $5b_1$ beträgt zumindest 1,00 mm und gibt das Ausmaß an, in welchem der Pinendabschnitt $5b_1$ das Niveau der Blockaußenfläche 1a in radialer Richtung überragt.

Die Tiefe tv der Vertiefung 2 und der Überstand $ü_{SK}$ des Spikekörpers 5a sind daher in den angegebenen Bereichen unter Berücksichtigung des Abstands $a_K$ des Spikekörpers 5a zur Blockaußenfläche 1a gewählt.

Entsprechend den Beziehungen I bis V lassen sich bei einem Fahrzeugluftreifen, in dessen Laufstreifen Spikes 5 eingesetzt sind, die Länge $c_P$ des Pinendabschnitts $5b_1$, der Überstand $ü_P$ des Pinendabschnitts $5b_1$, der Überstand $ü_{SK}$ des Spikekörpers 5a, die Tiefe tv der Vertiefung 4 und der Abstand $a_K$ der Oberseite 5a' des Spikekörpers 5a zur Blockaußenfläche 1a feststellen.

Von der Vertiefung 2 verbleibt bei eingesetztem Spike 5 ein nicht vom Spikekörper 5a und nicht vom Pinendabschnitt $5b_1$ eingenommener Vertiefungsteil, welcher ein Eisreservoir zur Aufnahme der bei Fahren auf eisbedeckter Fahrbahn anfallenden Eispartikel (Eisspäne) bildet. Der Vertiefungsboden 2a oder Abschnitte des Vertiefungsbodens 2a grenzen an den Spikekörper 5a an (siehe Fig. 6 und Fig. 9).

Die Erfindung ist auf das beschriebene Ausführungsbeispiel nicht beschränkt.

Der Fahrzeugluftreifen weist einen Laufstreifen mit beliebigen, zur Laufstreifenperipherie reichenden Profilpositiven, daher insbesondere mit Profilblöcken und/oder Profilrippen, auf, welche durch Rillen, insbesondere durch auf die jeweils vorgesehene Profiltiefe ausgeführte Rillen, begrenzt sind. Die Ableitkanäle 4 sind optional. Die Vertiefung 2 kann den jeweils eingesetzten Spike 5, in Draufsicht betrachtet, ringförmig umlaufen.

**Bezugszeichenliste**

| | |
|---|---|
| 1 | Profilblock |
| 1a | Blockaußenfläche |
| 2 | Vertiefung |
| 2a | Vertiefungsboden |
| 3 | Spikeloch |
| 3a | Locheinlauf |
| 3b | Kanal |
| 3c | Fußöffnung |
| 3d | Lochboden |
| 4 | Ableitkanal |
| 4a | Hauptabschnitt |
| 4b | Endabschnitt |
| 4c | Kanalboden |
| 5 | Spike |
| 5a | Spikekörper |
| $5a_1$ | Oberflansch |
| $5a_2$ | Mittelflansch |
| $5a_3$ | Fußflansch |
| 5a | Oberseite |
| 5b | Spikepin |
| $5b_1$ | Pinendabschnitt |
| $a_1$ | Hauptachse |
| $a_K$ | Abstand |
| $a_P$ | Pinachse |
| $a_S$ | Spikeachse |
| $c_P$ | Länge |
| $E_1$ | Symmetrieebene |
| $h_{SK}$ | Höhe |
| tv, $t_{SL}$ | Tiefe |
| $ü_P$ | Überstand |
| $ü_{SK}$ | Überstand |
| $Z_9$ | Detail |

**Patentansprüche**

1.  Kombination aus einem Fahrzeugluftreifen und Spikes (5),

   wobei der Fahrzeugluftreifen einen Laufstreifen mit Profilpositiven (1) aufweist, in welchen Vertiefungen (2) mit jeweils einem Vertiefungsboden (2a) ausgebildet sind, von welchem je ein Spikeloch (3) zum Einsetzen eines Spikes (5) ausgeht, wobei der bei eingesetztem Spike (5) von diesem nicht eingenommene Teil der Vertiefung (2) ein Eisreservoir zur Aufnahme von Eispartikeln bildet,
   wobei jeder Spike (5) einen Spikekörper (5a) und einen in diesem verankerten Spikepin (5b) aufweist,
   wobei folgende Beziehungen gelten

$$h_{SK} > t_{SL} \qquad \text{Beziehung I}$$

$$ü_{SK} = h_{SK} - t_{SL} \qquad \text{Beziehung II}$$

$$t_V > ü_{SK} \qquad \text{Beziehung III}$$

$$a_K = t_V - ü_{SK} \qquad \text{Beziehung IV}$$

wobei

$h_{SK}$ die Höhe des Spikekörpers (5a),
$t_{SL}$ die Tiefe des Spikeloches (3),
$ü_{SK}$ der Überstand des Spikekörpers (5a) bei eingesetztem Spike (5),
tv die Tiefe der Vertiefung (2) und
$a_K$ der Abstand des Spikekörpers (5a) zur Laufstreifenperipherie bei eingesetztem Spike (5) ist,

wobei der Überstand ($ü_{SK}$) des Spikekörpers (5a) zumindest 0,10 mm beträgt, **dadurch gekenzeichnet**, dass die Tiefe (tv) der Vertiefung (2) 0,70 mm bis 1,20 mm und der Abstand ($a_K$) des Spikekörpers (5a) zur Laufstreifenperipherie bei eingesetztem Spike (5) zumindest 0,40 mm beträgt.

**2.** Fahrzeugluftreifen mit einem Laufstreifen mit Profilpositiven (1), in welchen Vertiefungen (2) mit jeweils einem Vertiefungsboden (2a) ausgebildet sind, von welchem je ein Spikeloch (3) ausgeht, in welches ein Spike (5) eingesetzt ist, wobei der vom Spike (5) nicht eingenommene Teil der Vertiefung (2) ein Eisreservoir zur Aufnahme von Eispartikeln bildet,

wobei jeder Spike (5) einen Spikekörper (5a) und einen in diesem verankerten Spikepin (5b) aufweist, wobei an den Spikekörper (5a) der Vertiefungsboden (2a), ein ringförmig umlaufender Abschnitt des Vertiefungsbodens (2a) oder mehrere Abschnitte des Vertiefungsbodens (2a) angrenzt bzw. angrenzen, wobei sich der Spikekörper (5a) komplett radial innerhalb der Laufstreifenperipherie befindet und wobei der Spikekörper (5a) zur Laufstreifenperipherie einen Abstand ($a_k$) und einen gegenüber dem Niveau des Vertiefungsbodens (2a) ermittelten Überstand ($ü_{SK}$) von zumindest 0,10 mm aufweist, **dadurch gekenzeichnet**, dass die Tiefe (tv) der Vertiefung (2) 0,70 mm bis 1,20 mm und der Abstand ($a_k$) des Spikekörpers (5a) zur Laufstreifenperipherie zumindest 0,40 mm beträgt.

**3.** Kombination nach Anspruch 1, **dadurch gekennzeichnet,**

**dass** der Spikepin (5b) einen aus dem Spikekörper (5a) herausragenden Pinendabschnitt ($5b_1$) aufweist, wobei ferner folgende Beziehung gilt

$$ü_P = c_P - a_K \qquad \text{Beziehung V}$$

wobei

$ü_P$ der Überstand des Pinendabschnitts ($5b_1$) bei eingesetztem Spike (5),
cp die Länge des Pinendabschnitts ($5b_1$) und
$a_K$ der Abstand des Spikekörpers (5a) zur Laufstreifenperipherie bei eingesetztem Spike (5) ist,

wobei der Überstand (üp) des Pinendabschnitts ($5b_1$) zumindest 1,00 mm beträgt.

**4.** Fahrzeugluftreifen nach Anspruch 2, **dadurch gekennzeichnet,**
**dass** der Spikepin (5b) einen aus dem Spikekörper (5a) herausragen Pinendabschnitt ($5b_1$) mit einem gegenüber dem Niveau der Laufstreifenperipherie ermittelten Überstand ($ü_P$) von zumindest 1,00 mm aufweist.

**5.** Kombination nach Anspruch 1 oder 3 oder

Fahrzeugluftreifen nach Anspruch 2 oder 4,
**dadurch gekennzeichnet,**
**dass** die Tiefe (tv) der Vertiefung (2) bis zu 1,00 mm, insbesondere bis zu 0,90 mm, bevorzugt 0,75 mm bis 0,85 mm, und besonders bevorzugt 0,80 mm beträgt.

6. Kombination nach einem der Ansprüche 1, 3 oder 5 oder

Fahrzeugluftreifen nach einem der Ansprüche 2, 4 oder 5,
**dadurch gekennzeichnet,**
**dass** der Überstand ($\ddot{u}_{SK}$) des Spikekörpers (5a) höchstens 0,40 mm, insbesondere höchstens 0,30 mm, beträgt.

Fig. 1

Fig. 2

Fig. 3: III-III

Fig. 4: IV-IV

5b'

5b

5

5a

## Fig. 5

VII

1

5b

5

VIII

VIII

5a

VII

## Fig. 6

Fig. 7: VII-VII

Fig. 8: VIII-VIII

Fig. 9: Z₉

Europäisches
Patentamt

European
Patent Office

Office européen
des brevets

## EUROPÄISCHER RECHERCHENBERICHT

**Nummer der Anmeldung**

EP 24 17 5371

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2018/202341 A1 (CONTINENTAL REIFEN DEUTSCHLAND GMBH [DE]) 8. November 2018 (2018-11-08) * Seite 10, Absatz 2; Ansprüche; Abbildungen * | 1-6 | INV. B60C11/03 B60C11/16 |
| A | DE 10 2014 225047 A1 (CONTINENTAL REIFEN DEUTSCHLAND GMBH [DE]) 9. Juni 2016 (2016-06-09) * Ansprüche; Abbildungen * | 1-6 | |
| A | JP S59 96005 A (BRIDGESTONE CORP) 2. Juni 1984 (1984-06-02) * Ansprüche; Abbildungen 7a, 4a * | 1-6 | |
| A | WO 2013/092434 A1 (MICHELIN & CIE [FR]; MICHELIN RECH TECH [CH]) 27. Juni 2013 (2013-06-27) * Ansprüche; Abbildungen * | 1-6 | RECHERCHIERTE SACHGEBIETE (IPC) B60C |

Der vorliegende Recherchenbericht wurde für alle Patentansprüche erstellt

| Recherchenort | Abschlußdatum der Recherche | Prüfer |
|---|---|---|
| München | 22. Oktober 2024 | Thanbichler, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............
& : Mitglied der gleichen Patentfamilie, übereinstimmendes Dokument

EPO FORM 1503 03.82 (P04C03)

**EP 4 474 172 A1**

## ANHANG ZUM EUROPÄISCHEN RECHERCHENBERICHT
## ÜBER DIE EUROPÄISCHE PATENTANMELDUNG NR.

EP 24 17 5371

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2024

| Im Recherchenbericht angeführtes Patentdokument | Datum der Veröffentlichung | Mitglied(er) der Patentfamilie | Datum der Veröffentlichung |
|---|---|---|---|
| WO 2018202341 A1 | 08-11-2018 | DE 102017207316 A1 | 08-11-2018 |
| | | EP 3619057 A1 | 11-03-2020 |
| | | RU 2725828 C1 | 06-07-2020 |
| | | WO 2018202341 A1 | 08-11-2018 |
| DE 102014225047 A1 | 09-06-2016 | DE 102014225047 A1 | 09-06-2016 |
| | | EP 3031628 A1 | 15-06-2016 |
| JP S5996005 A | 02-06-1984 | KEINE | |
| WO 2013092434 A1 | 27-06-2013 | CA 2858159 A1 | 27-06-2013 |
| | | CN 103998259 A | 20-08-2014 |
| | | EP 2794302 A1 | 29-10-2014 |
| | | FR 2984803 A1 | 28-06-2013 |
| | | JP 6099668 B2 | 22-03-2017 |
| | | JP 2015502292 A | 22-01-2015 |
| | | KR 20140113965 A | 25-09-2014 |
| | | RU 2014129562 A | 10-02-2016 |
| | | US 2014326384 A1 | 06-11-2014 |
| | | WO 2013092434 A1 | 27-06-2013 |

EPO FORM P0461

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

**In der Beschreibung aufgeführte Patentdokumente**

- DE 102014225047 A1